# EUROPEAN PATENT APPLICATION

(11) **EP 2 267 586 A2**
(43) Date of publication of application: **29.12.2010**
(21) Application number: 10160561.6
(22) Date of filing: 21.04.2010
(51) Int. Cl.: G06F 3/041, G06F 3/033

(54) **Touch input for a user**

(30) Priority: 26.06.2009 US 459100
(71) Applicant: Nokia Corporation, 02150 Espoo (FI)
(72) Inventor: Grant, Silas, London, Greater London N1 1LS (GB); Wong, Chee Yee, London, Greater London N1 2XH (GB); Mycroft, Damian, Warwickshire, Greater London CV35 9QR (GB)
(74) Representative: Tognetty, Virpi Maria

(57) **Abstract**

An apparatus including: a housing portion having a length, a width and a depth; and a display portion, comprising a touch sensitive display extending length-wise and width-wise, wherein the display portion is configured to move between a first position in which the display portion has been elevated relative to the housing by translational depth-wise movement and a second position in which the display portion has been lowered from the first position towards the housing by translational depth-wise movement and wherein the touch sensitive display is configured to detect any one of a plurality of locations at which a user touches the touch sensitive display.

## Description

### FIELD OF THE INVENTION

Embodiments of the present invention relate to improved touch input at an apparatus for a user. In particular, they relate to methods, apparatus and computer programs that provide improved touch input at an apparatus.

### BACKGROUND TO THE INVENTION

Touch sensitive displays are flexible. They can for example be controlled to present different arrangements of touch sensitive icons.

Keyboards are by comparison inflexible. However, the keys of a keyboard typically travel when actuated providing the user tactile feedback.

A soft or programmable key is a key positioned adjacent a display. A legend in the display adjacent the key indicates the key's current function. As the function of the key is changed the content of the legend is changed. Soft or programmable keys have some of the advantages of touch sensitive keys such as increased flexibility compared to a keyboard and some of the advantages of a keyboard such as tactile feedback

### BRIEF DESCRIPTION OF VARIOUS EMBODIMENTS OF THE INVENTION

According to various, but not necessarily all, embodiments of the invention there is provided an apparatus comprising: a housing portion having a length, a width and a depth; and a display portion, comprising a touch sensitive display extending length-wise and width-wise, wherein the display portion is configured to move between a first position in which the display portion has been elevated relative to the housing by translational depth-wise movement and a second position in which the display portion has been lowered from the first position towards the housing by translational depth-wise movement and wherein the touch sensitive display is configured to detect any one of a plurality of locations at which a user touches the touch sensitive display. This provides flexibility via the touch sensitive display and provides tactile feedback via travel of the display portion in response to touch input at the touch sensitive display.

Tactile feedback via travel of the display portion in response to touch input at the touch sensitive display may be provided only when the touch input at the touch sensitive display is a valid touch input.

Raising the display portion relative to the housing portion may promote the display portion relative to the housing portion by separating an upper surface of the touch sensitive display from an upper surface of the housing.

When the display portion is in the first position there may be a depth-wise step change between a level of an exterior surface of the display portion and a level of an exterior surface of the housing portion

The housing portion may comprise a recess extending length-wise and width-wise and sized to snugly receive the display portion. The display portion may be configured to move into the recess to attain the second position and to slide at least partially out of the recess to attain the first position.

The display portion may retain the same orientation in the first position and the second position.

The touch sensitive display may be flat and lie within a two-dimensional plane extending length-wise and width-wise. The translational movement of the display portion may be normal to the two-dimensional plane.

The display portion may be biased towards the first position and away from the second position. User touch actuation of the touch sensitive display may cause the display portion to travel towards the housing portion from the first position to the second position.

The apparatus may comprises a controller configured to enable and disable movement of the display portion relative to the housing portion.

The controller may be configured:
to determine whether a detected touch input at the touch sensitive display is valid; to enable travel of the display portion from the first position to the second position in response to the touch input if the detected touch input is valid; and to prevent travel of the display portion in response to the touch input if the detected input is invalid.

A detected touch input may be valid when a detected location at which a user touches the touch sensitive display corresponds which a location of an icon for touch input displayed on the touch sensitive display.

The controller may be configured: to detect a change in state of the apparatus; to automatically control movement of the touch sensitive display from the second position to the first position.

When the display portion is in the second position the touch sensitive display may not be operational for touch input and when the display portion is in the first position the touch sensitive display may be operational for touch input.

The apparatus may be configured to generate a particular user input signal, identifying a particular location at which a user has touched the touch sensitive display, as a consequence of a user touching the touch sensitive display at the particular location and not as a consequence of movement of the display portion.

According to various, but not necessarily all, embodiments of the invention there is provided a method comprising: determining whether a detected touch input at a touch sensitive display is valid; if the detected input is valid enabling travel of the touch sensitive display in response to the touch input; and if the detected input is invalid preventing travel of the touch sensitive display in response to the touch input.

According to various, but not necessarily all, embodiments of the invention there is provided an apparatus comprising:
means for determining whether a detected touch input at a touch sensitive display is valid;
means for enabling travel of the touch sensitive display in response to the touch input if the detected input is valid; and
means for preventing travel of the touch sensitive display in response to the touch input if the detected input is invalid.

According to various, but not necessarily all, embodiments of the invention there is provided a computer program that when run on a computer performs:
determining whether a detected touch input at a touch sensitive display is valid;
if the detected input is valid enabling travel of the touch sensitive display in response to the touch input; and if the detected input is invalid preventing travel of the touch sensitive display in response to the touch input.

According to various, but not necessarily all, embodiments of the invention there is provided a method comprising: detecting a change in state of an apparatus comprising a touch sensitive display; automatically moving the touch sensitive display to an elevated position from which it can travel in response to touch input at the touch sensitive display.

The change in state detected may be a change from a state in which the touch sensitive display is not operable for touch input to a state in which touch sensitive display is operable for touch input.

According to various, but not necessarily all, embodiments of the invention there is provided an apparatus comprising: means for detecting a change in state of an apparatus comprising a touch sensitive display; and means for automatically moving the touch sensitive display to an elevated position from which it can travel in response to touch input at the touch sensitive display.

According to various, but not necessarily all, embodiments of the invention there is provided a computer program that when run on a computer performs:
detecting a change in state of an apparatus comprising a touch sensitive display;
automatically enabling movement of the touch sensitive display to an elevated position from which it can travel in response to touch input at the touch sensitive display.

According to various, but not necessarily all, embodiments of the invention there is provided an comprising: a housing portion; a display portion, comprising a planar touch sensitive display lying in a plane wherein the touch sensitive display is configured to detect any one of a plurality of locations at which a user touches the touch sensitive display and wherein the apparatus has a compact configuration in which a plane of the touch sensitive display lies in a reference plane fixed relative to the housing portion; and an expanded configuration in which the plane of the touch sensitive display is elevated with respect to the reference plane and lies substantially parallel to the reference plane.

A vector normal to the plane of the touch sensitive display and fixed relative to the touch sensitive display may have the same position and orientation in the compact configuration and the expanded configuration.

The housing portion may circumscribe the display portion in the compact configuration.

### BRIEF DESCRIPTION OF THE DRAWINGS

For a better understanding of various examples of embodiments of the present invention reference will now be made by way of example only to the accompanying drawings in which:
Fig 1 schematically illustrates the apparatus in a compact configuration using a plan view from above;
Fig 2A schematically illustrates the apparatus in the compact configuration using a lengthwise cross-sectional view;
Fig 2B schematically illustrates the apparatus in the compact configuration using a widthwise cross-sectional view;
Fig 3 schematically illustrates the apparatus in the compact configuration using a perspective view from above and to the side;
Fig 4 schematically illustrates the apparatus in a expanded configuration using a plan view from above;
Fig 5A schematically illustrates the apparatus in the expanded configuration using a lengthwise cross-sectional view;
Fig 5B schematically illustrates the apparatus in the expanded configuration using a widthwise cross-sectional view;
Fig 6 schematically illustrates the apparatus in the expanded configuration using a perspective view from above and to the side;
Fig 7 schematically illustrates some functional components of the apparatus;
Figs 8A and 8B schematically illustrate examples of different arrangements of active touch sensitive icons in a touch sensitive display;
Fig 9 schematically illustrates an alternative example of the apparatus using the same perspective as Figs 1 and 4;
Fig 10 schematically illustrates the alternative example of the apparatus in the compact configuration using the same perspective as Fig 3;
Fig 11 schematically illustrates the alternative example of the apparatus in the expanded configuration using the same perspective as Fig 6;
Fig 12 schematically illustrates blocks in a method for enabling/disabling travel of the display portion from the elevated position to a less elevated position in response to user touch input; and
Fig 13 schematically illustrates blocks in a method for positioning the display portion in dependence on the state of the apparatus.

### DETAILED DESCRIPTION OF VARIOUS EMBODIMENTS OF THE INVENTION

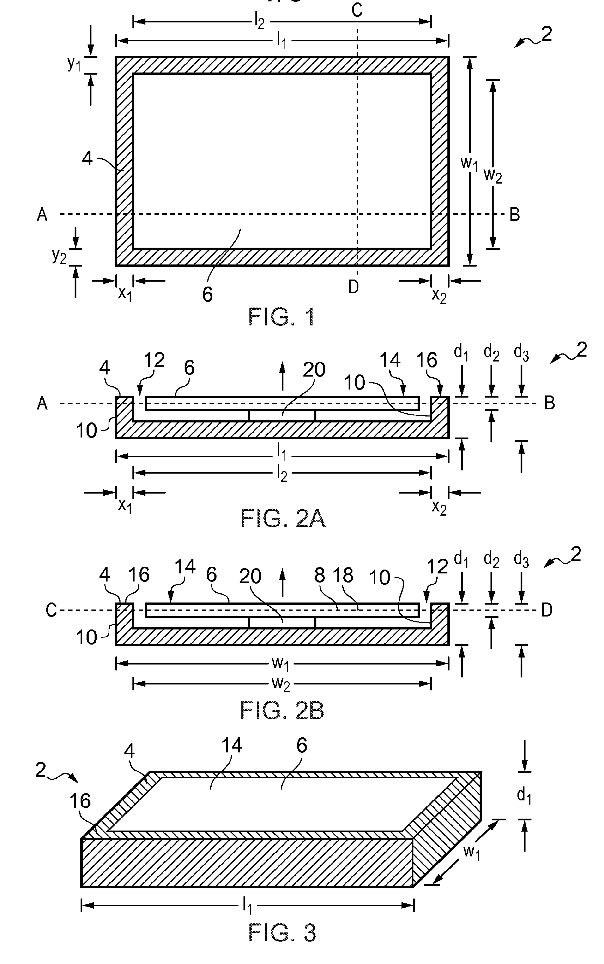

Figs 1-7 and 9-11 schematically illustrate an apparatus 2 that can change configuration. The apparatus 2 comprises a housing portion 4 and a display portion 6 comprising a touch sensitive display. The touch sensitive display may be configured to detect any one of a plurality of locations at which a user touches the touch sensitive display.

The display portion 6 is configured to move between a first more elevated position and a second less elevated position. The movement may be as a consequence of user touch input at the touch sensitive display.

The apparatus 2 may be a hand-portable apparatus that is sized to be carried in a user's palm or jacket pocket or handbag. The apparatus 2 may be a personal apparatus that is intended primarily for the user of a particular user. The apparatus 2 may have additional functionality. The apparatus 2 may, for example, operate as a mobile cellular telephone and/or a personal media player and/or a personal digital assistant etc.
Figs 1 to 3 schematically illustrate one embodiment of the apparatus 2 when the apparatus 2 is in a compact configuration in which the display portion has been lowered to a retracted position. Fig 1 schematically illustrates the apparatus 2 in plan view from above. Fig 2A schematically illustrates the apparatus 2 through the lengthwise cross-section AB illustrated in Fig 1. Fig 2B schematically illustrates the apparatus 2 through the width cross-section CD illustrated in Fig 1. Fig 3 schematically illustrates the apparatus 2 in a perspective view from above and to the side.

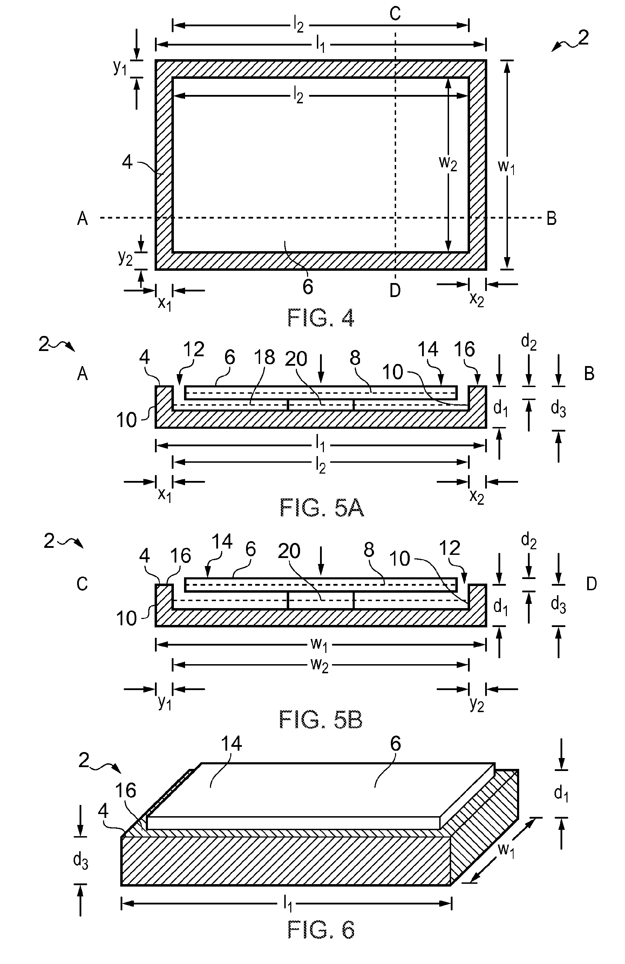

Figs 4 to 6 schematically illustrate one embodiment of the apparatus 2 when the apparatus 2 is in an expanded configuration in which the display portion has been raised to an elevated position. Fig 4 schematically illustrates the apparatus 2 in plan view from above. Fig 5A schematically illustrates the apparatus 2 through the lengthwise cross-section AB illustrated in Fig 4. Fig 5B schematically illustrates the apparatus 2 through the width cross-section CD illustrated in Fig 4. Fig 6 schematically illustrates the apparatus 2 in a perspective view from above and to the side.

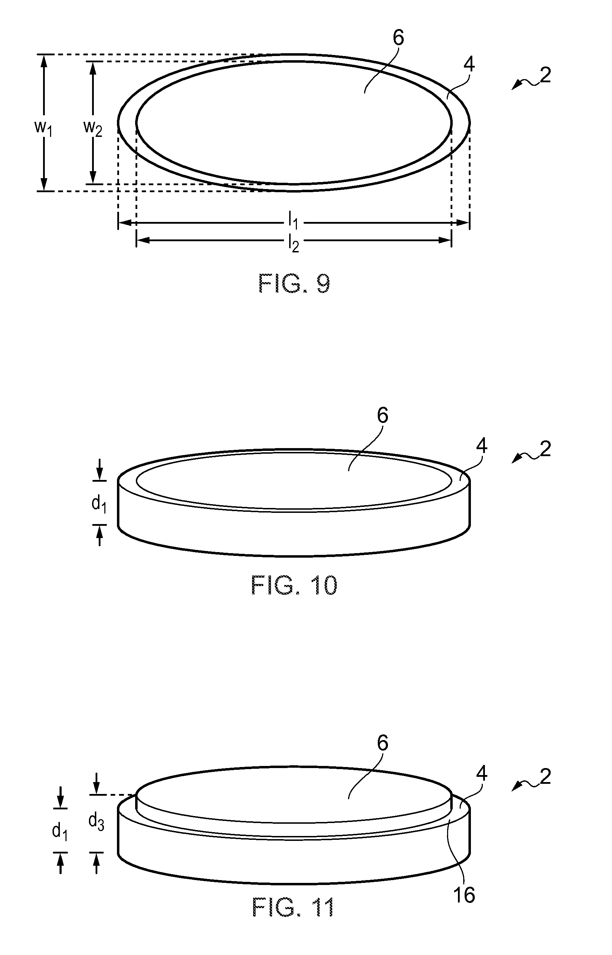

The housing portion 4 has a length /₁ , a width *w*₁ and a depth *d*₁ In this example, the apparatus 2 is approximately cuboid but the apparatus may have other shapes as illustrated, for example, in Figs 9 to 11.

The display portion 6 has a length *l*₂ , a width *w*₂ and a depth *d*₂. The length /₁ > length *l*₂ , the width *w*₁ > the width *w*₂ and the depth *d*₁ > depth *d*₂. The display portion 6 comprises a flat touch sensitive display extending length-wise and width-wise in a two-dimensional plane 8.

In this example the housing portion 4 comprises wall portions 10 defining a recess 12 sized to circumscribe the display portion 6. In this example, the display portion 6 has a substantially rectangular front face defined by length /₂ and a width *w*₂ and the wall portions 10 are sized to extend on four sides of the recess. The sidewalls 10 extend just more than the length /₂ of the display portion and just more than the width *w*₂ of the display portion. The recess 12 is therefore sized to snugly receive the display portion 6.

Referring to Figs 1 to 3, when the apparatus 2 is in the compact configuration, the display portion 6 is in a retracted or non-elevated position.

In the illustrated example, the display portion 6 is wholly received with the recess 12. An upper surface 14 of the display portion 6 is flush with an upper surface 16 of the housing portion 4. The display portion 6 therefore has a very low or non existent profile.

In the illustrated compact configuration, the display portion 6 is snugly received within the recess 12 and there is a small length wise gap between the display portion 6 and the housing wall portions 10 and a small width wise gap between the display portion 6 and housing wall portions 10.

The plane 8 of the touch sensitive display lies coincident with a reference plane 18. The reference plane 18 is fixed relative to the housing portion 4.

Referring to Figs 4 to 6, when the apparatus 2 is in the expanded configuration, the display portion 6 is in an elevated position. The elevated position promotes the display portion 6 relative to the housing portion 4.

The volume of the apparatus 2 as defined by the exterior surfaces of the housing portion and the display portion is smaller in the compact configuration than the expanded configuration

In the illustrated example, the display portion 6 is partially received with the recess 12. The upper surface 14 of the display portion 6 is at a higher level *d*₃ than the level *d*₁ of the upper surface 16 of the housing portion. The difference *d*₃₋ *d*₁ between the level of the upper surface 14 of the display portion 6 and the upper surface 16 of the housing portion may, for example, be of the order 1 mm or between 1 mm and 4mm. The display portion 6 therefore has a raised or higher profile.

In the illustrated expanded configuration, a first portion of the display portion 6 is snugly received within the recess 12 and a second portion of the display portion protrudes from the recess 12. However, in this example, the amount *d*₃₋ *d*₁ by which the display portion protrudes is less than the depth of the display portion *d*₂. There is therefore a small length wise gap between the display portion 6 and the housing wall portions 10 and a small width wise gap between the display portion 6 and housing wall portions 10. The wall portions 10 circumscribe the first portion of the display portion 6. There is also a depth-wise step change between the level *d*₃ of the upper surface 14 of the display portion 6 and the level *d*₁ of the upper surface 16 of the housing portion 4.

The plane 8 of the display portion is elevated with respect to the fixed reference plane 18 and lies substantially parallel to the reference plane 18. In the examples illustrated, the orientation of the display portion 6 does not change between the compact configuration and the expanded configuration. In the examples illustrated, the displacement of the display portion 6 relative to the housing portion 4 changes only in the depth wise direction between the compact configuration and the expanded configuration and does not change in the length wise or width wise directions between the compact configuration and the expanded configuration. Thus a vector normal to the plane 8 of the display portion 6 and fixed relative to the display portion 6 has the same position and orientation in the compact configuration and the expanded configuration.

The movement of the display portion 6 between the compact configuration and the expanded configuration comprises a depth-wise movement. In some embodiments, the movement of the display portion 6 between the compact configuration and the expanded configuration may consist of only a translational depth-wise movement. In other embodiments the movement of the display portion 6 between the compact configuration and the expanded configuration may comprise some displacement of the display portion 6 length wise and/or width wise and/or some rotation of the display portion 6 relative to the housing portion 4.

The translational depth wise movement of the display portion 6 is normal to the plane 8 of the display portion 6.

A drive mechanism 20 may be provided to drive the display portion 6 from the retracted position of the compact configuration to the elevated position of the expanded configuration.

The drive mechanism is such that it enables the display portion 6 to travel from the elevated position of the expanded configuration to another less elevated position when the display portion 6 is touched by a user. The less elevated position may be the retracted position of the compact configuration.

An example of a suitable drive mechanism is a resiliently biased member that biases the display portion 6 towards the elevated position of the expanded configuration. An example of a suitable bias is a spring. The drive mechanism is such that it enables the display portion 6 to travel automatically from the less elevated position to the elevated position of the expanded configuration when the user stops touching the display portion 6. The less elevated position may be the retracted position of the compact configuration.

The display portion 6 may disabled for touch input when it is in the less elevated position and enabled for touch input when it is in the elevated position of the expanded configuration.

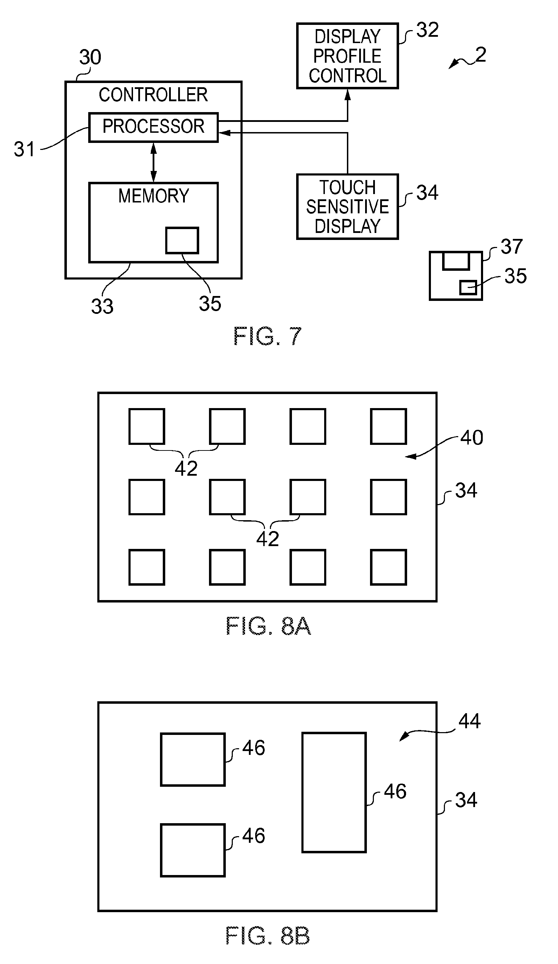

Fig 7 schematically illustrates some functional components of the apparatus 2.

The apparatus 2 comprises a controller 30, a mechanism 32 for controlling the position of the display portion 6 and a touch sensitive display 34 which is comprised in the display portion 6.

Implementation of controller 30 can be in hardware alone ( a circuit, a processor...), have certain aspects in software including firmware alone or can be a combination of hardware and software (including firmware).

The controller 30 may be implemented using instructions that enable hardware functionality, for example, by using executable computer program instructions in a general-purpose or special-purpose processor that may be stored on a computer readable storage medium (disk, memory etc) to be executed by such a processor.

In the illustrated example, the controller 30 comprises a processor 31 configured to read from and write to a memory 33. The processor 31 may also comprise an output interface via which data and/or commands are output by the processor 31 and an input interface via which data and/or commands are input to the processor 31.

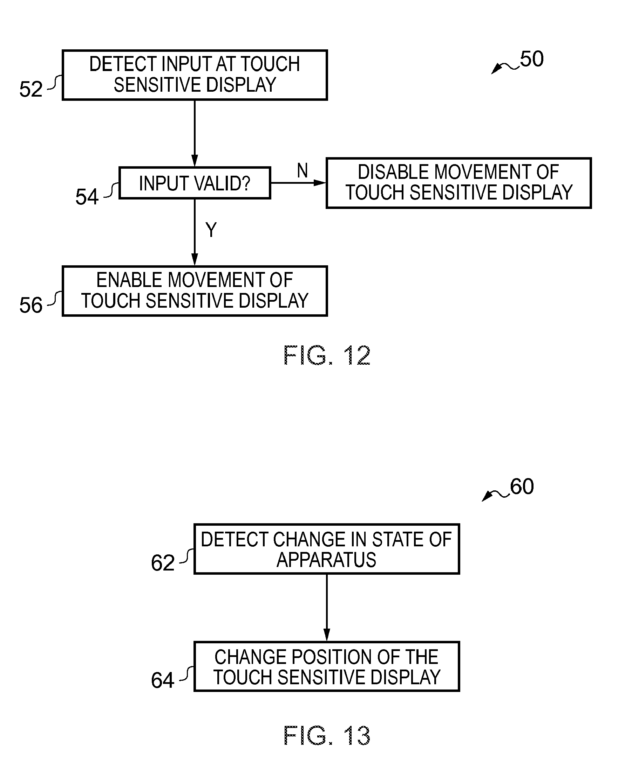

The memory 33 stores a computer program 35 comprising computer program instructions that control the operation of the apparatus 2 when loaded into the processor 31. The computer program instructions 35 provide the logic and routines that enables the apparatus 2 to perform the methods illustrated in Figs 12 and 13. The processor 31 by reading the memory 33 is able to load and execute the computer program 35.

The computer program may arrive at the apparatus 2 via any suitable delivery mechanism 37. The delivery mechanism 37 may be, for example, a computer-readable storage medium, a computer program product, a memory device, a record medium such as a CD-ROM or DVD, an article of manufacture that tangibly embodies the computer program 35. The delivery mechanism may be a signal configured to reliably transfer the computer program 35. The apparatus 2 may propagate or transmit the computer program [REF] as a computer data signal.

Although the memory 33 is illustrated as a single component it may be implemented as one or more separate components some or all of which may be integrated/removable and/or may provide permanent/semi-permanent/ dynamic/cached storage.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used here 'module' refers to a unit or apparatus that excludes certain parts/components that would be added by an end manufacturer or a user. The controller 30 may be provided as a module.

The controller 30 is configured to receive user input signal from the touch sensitive display 34 which identify, for example, a location or locations at which a user has touched the touch sensitive display 34.

The touch sensitive display 42 is configured to generate a particular user input signal, identifying a particular location(s) at which a user has touched the touch sensitive display. The touch sensitive display 34 may be configured to detect any one of a plurality of locations at which a user touches the touch sensitive display 34. The action of a user touching the touch sensitive display creates a local change in a property that is sensed by a detector. The change in property may be a change in electrical property such as resistance or capacitance.

User input arises as a consequence of a user touching the touch sensitive display at particular location(s) and not as a consequence of movement of the display portion.

The controller 30 is configured to provide movement control signals to the mechanism 32. The movement control signals may enable and disable movement of the display portion 6 relative to the housing portion 4.

The controller 30 is configured to provide display control signals to the touch sensitive display 34. The display control signals control which locations of the touch sensitive display present 'active' areas or icons for user touch input. Fig 8A illustrates a first arrangement 40 of active icons 42. Fig 8B illustrates a different second arrangement 44 of different icons 46. The controller 30 is able to dynamically control the touch sensitive display 34 to display different arrangements of different icons. If a user touches a location on the touch sensitive display 34 that corresponds with an active icon, then the controller 30 registers a valid input and discriminates the selected active icon from the location of the touch. If a user touches a location on the touch sensitive display 34 that does not corresponds with an active icon, then the controller 30 registers an invalid input.

The mechanism 32 may for example control whether the display is movable from the elevated position of the expanded configuration. The mechanism 32 may be controlled to lock the display portion 6 in the elevated position preventing travel of the display portion 6 from the elevated position of the expanded configuration to another less elevated position when the display portion 6 is touched by a user. The mechanism 32 may be controlled to unlock the display portion in the elevated position enabling travel of the display portion 6 from the elevated position of the expanded configuration to another less elevated position when the display portion 6 is touched by a user.

The controller 30 may be configured to detect a user input signal from the touch sensitive display 34 which identify, for example, a location or locations at which a user has touched the touch sensitive display 34 is valid. This is illustrated in block 52 of the method 50 illustrated in Fig 12.

The controller 30 may be configured to determine whether the detected touch input signal is valid. This is illustrated in block 52 of the method 50 illustrated in Fig 12.

The controller 30 may be configured to enable, if the detected input is valid, travel of the display portion 6 from the elevated position to a less elevated position in response to the touch input. This is illustrated in block 56 of the method 50 in Fig 12.

A detected touch input may be valid when a detected location at which a user touches the touch sensitive display corresponds which a location of an active icon for touch input displayed on the touch sensitive display 34.

The controller 30 may be configured to disable, if the detected input is invalid, travel of the display portion 6 from the elevated position to a less elevated position in response to the touch input. This is illustrated in block 58 of the method 50 in Fig 12.

The mechanism 32 may for example be controlled to move the display portion 6 from the elevated position of the expanded configuration to the retracted position of the compact configuration and/or controlled to move the display portion 6 from the retracted position of the compact configuration to the elevated position of the expanded configuration.

The controller 30 may be configured to detect a change in state of the apparatus. This is illustrated in block 62 of the method 60 illustrated in Fig 13.

The controller 30 may be configured to automatically control movement of the display portion 6 from the retracted position of the compact configuration to the elevated position of the expanded configuration. The controller 40 may control the mechanism 32 to the elevated position of the expanded configuration from which it can travel in response to touch input at the touch sensitive display 34.

A suitable change in state of the apparatus may be from a state in which the touch sensitive display is not operable for touch input to a state in which the touch sensitive display is operable for touch input.

For example, a suitable change in state of the apparatus may be from an idle state to an active state. An alternative or additional suitable change in state of the apparatus may be from a locked state to an unlocked state. An alternative or additional suitable change in state of the apparatus may be from an off state to an on state.

Figs 9, 10 and 11 schematically illustrate one alternative example of the many possible design alternatives for the apparatus 2. In this example, the apparatus 2 has a substantially oval shape in the length-width plane. The recess 12 formed by circumscribing walls of the housing portion 4 has an oval shape in the length-width plane which corresponds with the oval shape of the display portion 6 in the length-width plane so that the display portion 6 is received snugly within the recess 12. Fig 9 corresponds to Figs 1 and 4, Fig 10 corresponds to Fig 3 and Fig 11 corresponds to Fig 6.

The blocks illustrated in the Figs 12 and 13 may represent steps in a method and/or sections of code in the computer program 35. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
a housing portion having a length, a width and a depth; and
a display portion, comprising a touch sensitive display extending length-wise and width-wise, wherein the display portion is configured to move between a first position in which the display portion has been elevated relative to the housing by translational depth-wise movement and a second position in which the display portion has been lowered from the first position towards the housing by translational depth-wise movement and wherein the touch sensitive display is configured to detect any one of a plurality of locations at which a user touches the touch sensitive display.

2. An apparatus as claimed in claim 1, wherein raising the display portion relative to the housing portion promotes the display portion relative to the housing portion by separating an upper surface of the touch sensitive display from an upper surface of the housing and/or wherein when the display portion is in the first position there is a depth-wise step change between a level of an exterior surface of the display portion and a level of an exterior surface of the housing portion.

3. An apparatus as claimed in claim 1 or 2, wherein the housing portion comprises a recess extending length-wise and width-wise and sized to snugly receive the display portion and wherein the display portion is configured to move into the recess to attain the second position and to slide at least partially out of the recess to attain the first position and/or wherein the display portion retains the same orientation in the first position and the second position.

4. An apparatus as claimed in any preceding claim, wherein the touch sensitive display is flat and lies within a two-dimensional plane extending length-wise and width-wise, and wherein the translational movement of the display portion is normal to the two-dimensional plane.

5. An apparatus as claimed in any preceding claim, wherein the display portion is biased towards the first position and away from the second position, and wherein user touch actuation of the touch sensitive display causes the display portion to travel towards the housing portion from the first position to the second position.

6. An apparatus as claimed in any preceding claim comprising a controller configured to enable and disable movement of the display portion relative to the housing portion and/or wherein the controller is configured:
to determine whether a detected touch input at the touch sensitive display is valid;
to enable travel of the display portion from the first position to the second position in response to the touch input if the detected touch input is valid; and
to prevent travel of the display portion in response to the touch input if the detected input is invalid.

7. An apparatus as claimed in claim 6, wherein a detected touch input is valid when a detected location at which a user touches the touch sensitive display corresponds which a location of an icon for touch input displayed on the touch sensitive display.

8. An apparatus as claimed in claim 6 or 7 wherein the controller is configured:
to detect a change in state of the apparatus;
to automatically control movement of the touch sensitive display from the second position to the first position.

9. An apparatus as claimed in any preceding claim, wherein when the display portion is in the second position the touch sensitive display is not operational for touch input and when the display portion is in the first position the touch sensitive display is operational for touch input.

10. An apparatus as claimed in any preceding claim, wherein the apparatus is configured to generate a particular user input signal, identifying a particular location at which a user has touched the touch sensitive display, as a consequence of a user touching the touch sensitive display at the particular location and not as a consequence of movement of the display portion.

11. An apparatus as claimed in claim 1, comprising:
wherein the touch sensitive display is planar extending in a plane;
and wherein the apparatus has a compact configuration in which the plane of the touch sensitive display lies in a reference plane fixed relative to the housing portion;
and an expanded configuration in which the plane of the touch sensitive display is elevated with respect to the reference plane and lies substantially parallel to the reference plane.

12. An apparatus as claimed in claim 11, wherein a vector normal to the plane of the touch sensitive display and fixed relative to the touch sensitive display has the same position and orientation in the compact configuration and the expanded configuration and/or wherein the housing portion circumscribes the display portion in the compact configuration.

13. A method comprising:
determining whether a detected touch input at a touch sensitive display is valid;
if the detected input is valid enabling travel of the touch sensitive display in response to the touch input; and
if the detected input is invalid preventing travel of the touch sensitive display in response to the touch input.

14. An apparatus comprising:
means for determining whether a detected touch input at a touch sensitive display is valid;
means for enabling travel of the touch sensitive display in response to the touch input if the detected input is valid; and
means for preventing travel of the touch sensitive display in response to the touch input if the detected input is invalid.

15. A computer program that when run on a computer performs:
determining whether a detected touch input at a touch sensitive display is valid;
if the detected input is valid enabling travel of the touch sensitive display in response to the touch input; and
if the detected input is invalid preventing travel of the touch sensitive display in response to the touch input.
